# EUROPEAN PATENT APPLICATION

(11) **EP 4 711 873 A1**
(43) Date of publication of application: **18.03.2026**
(21) Application number: 24200900.9
(22) Date of filing: 17.09.2024
(51) Int. Cl.: G05B 23/02

(54) **CONDITION MONITORING BASED ON MACHINE LEARNING WITH AN ADJUSTED FIRST PHYSICAL QUANTITY**

(71) Applicant: ABB SCHWEIZ AG, 5400 Baden (CH)
(72) Inventor: KAKOSIMOS, Panagiotis, 723 58 Västerås (SE); ALKKIOMAKI, Olli, 00220 Helsinki (FI); LI, Dinan, 723 59 Sweden (SE)
(74) Representative: Kransell & Wennborg KB

(57) **Abstract**

A method of adjusting data used for detecting faulty conditions of a machine comprises estimating, in a first machine learning model (30), required output data (OD) based on input data, which input data comprises at least one measured first physical quantity (PQ1_{M}) associated with the machine and the output data (OD) comprises at least one estimated second physical quantity (PQ2_{E}) of the machine, processing at least some of the input data for obtaining an adjusted first physical quantity (PQ1_{E}), in which adjusted first physical quantity (PQ1_{E}) external influences have been limited and applying the adjusted first physical quantity (PQ1_{E}) together with the input data without the measured physical quantity (RI) in the first machine learning model (30) for obtaining modified output data (OD*) for use in detecting faulty conditions of the machine, which modified output data (OD*) comprises at least one adjusted estimated second physical quantity (PQ2_{E}) in which the external influences have been limited.

## Description

### TECHNICAL FIELD

The technology disclosed herein relates generally to the field of monitoring of machines, and in particular to a method, data adjusting device, computer program and computer program product for adjusting data used for detecting faulty conditions of a machine.

### BACKGROUND

Condition monitoring of machines, such as electrical motors with or without motor drives, is important in that a fault may be identified and addressed before it becomes an issue.

US 2021/0341896 does for instance disclose industrial motor drives having condition monitoring. Instead of a condition monitoring external of the motor drive, the document suggests having an embedded analytic engine for motor drives.

Machine Learning can be of use in condition monitoring. Machine learning can be used for estimating output data based on measured input data.

However, there is a problem that a measured physical quantity that is a part of input data may be unreliable. For instance, if there is a fan problem in a machine, the ambient temperature usually measured at the air intake may be impacted. This could affect also the estimated output data.

There may thus be a problem in that a measured physical quantity used as an input in a machine learning model for condition monitoring purposes is unreliable.

A machine may comprise several components. Many of the components may additionally be equipped with temperature sensors, embedded in, for instance, windings, bearings, and frame. In electric drives the ambient temperature and the power module temperatures are also monitored. The temperature signals from these sensors, e.g., smart sensors that do not require wiring, may be used for raising an alarm when set thresholds are exceeded. However, for a component to reach such thresholds, either the failure is quite severe, thereby causing the considerable temperature rise, or the component was operating close to its maximum capacity prior to the temperature increase. Either way, the component may in such cases experience adverse operating conditions, which in turn reduces its lifetime.

Temperature signals are commonly used for detecting malfunctions in machines. In most cases, they are used as safety means: when a temperature threshold is violated, an alarm is raised, and the machine stops operating. Therefore, only cases in which the machine performs at the higher end of its capacity can be effectively monitored. If the operation is far from that point, the temperature rise needs to be quite significant for the threshold to be reached. This again has an adverse impact on the lifetime of the machine.

For a temperature to be accurately estimated, it must be referenced to a known temperature. The reference temperature that is often used is the coolant temperature or the ambient temperature. However, in some cases, a failure may impact the reference temperature, and thereby attenuate evidence of failure.

There is a need to address and improve various aspects of machine monitoring.

### SUMMARY

The invention is concerned with the problem of an unreliable first physical quantity that is input in a machine learning model used for condition monitoring of a machine.

One object of the invention is therefore to improve on the reliability of a first physical quantity that is input in a machine learning model used for condition monitoring of a machine.

This object is according to a first aspect achieved by a method of adjusting data used for detecting faulty conditions of a machine, the method comprising:
- estimating, in a first machine learning model, required output data based on input data, which input data comprises at least one measured first physical quantity associated with the machine and the output data comprises at least one estimated second physical quantity of the machine,
- processing at least some of the input data for obtaining an adjusted first physical quantity, in which adjusted first physical quantity external influences have been limited, and
- applying the adjusted first physical quantity together with the input data without the measured first physical quantity in the first machine learning model for obtaining modified output data for use in detecting faulty conditions of the machine, which modified output data comprises at least one adjusted estimated second physical quantity in which the external influences have been limited.

The object is according to a second aspect achieved through a data adjusting device for adjusting data used for detecting faulty conditions of a machine, the data adjusting device comprising a processor operative to:
- estimate, in a first machine learning model, required output data based on input data, which input data comprises at least one measured first physical quantity associated with the machine and the output data comprises at least one estimated second physical quantity of the machine,
- process at least some of the input data for obtaining an adjusted first physical quantity, in which adjusted first physical quantity external influences have been limited, and
- apply the adjusted first physical quantity together with the input data without the measured first physical quantity in the first machine learning model for obtaining modified output data for use in detecting faulty conditions of the machine, which modified output data comprises at least one adjusted estimated second physical quantity in which the external influences have been limited.

The object is according to a third aspect achieved through a computer program for adjusting data used for detecting faulty conditions of a machine, the computer program comprising computer program code which when run by a processor of a data adjusting device causes the data adjusting device to:
- estimate, in a first machine learning model, required output data based on input data, which input data comprises at least one measured first physical quantity associated with the machine and the output data comprises at least one estimated second physical quantity of the machine,
- process at least some of the input data for obtaining an adjusted first physical quantity, in which adjusted first physical quantity external influences have been limited, and
- apply the adjusted first physical quantity together with the input data without the measured first physical quantity in the first machine learning model for obtaining modified output data for use in detecting faulty conditions of the machine, which modified output data comprises at least one adjusted estimated second physical quantity in which the external influences have been limited.

The object is according to a fourth aspect achieved through a computer program product for adjusting data used for detecting faulty conditions of a machine, the computer program product comprising a data carrier with the computer program according to the third aspect.

The processing may comprise estimating the first physical quantity based on the input data without the measured first physical quantity, where the estimating of the first physical quantity may be performed in a second machine learning model. Additionally or instead, the estimating of the first physical quantity may be made using an analytical model of the first physical quantity.

The analytical model may be a model where the first physical quantity is expressed as a function of operating conditions and environmental conditions of the machine.

The estimating, in a first machine learning model, of required output data based on input data may be made in a first instance of the first machine learning model and the applying of the adjusted first physical quantity in the first machine learning model may comprise applying the adjusted first physical quantity together with the input data without the measured first physical quantity in the first instance of the first machine learning model. In this case, the applying of the adjusted first physical quantity in the first machine learning model may comprise replacing the measured first physical quantity with the adjusted first physical quantity in the first machine learning model, i.e. in the first instance of the first machine learning model.

Alternatively, the applying of the adjusted first physical quantity in the first machine learning model may comprise applying the estimated first physical quantity together with the input data without the measured first physical quantity in a second instance of the first machine learning model.

According to one variation of the first aspect, the method further comprises investigating the measured first physical quantity with regard to the adjusted first physical quantity and determining that the adjusted first physical quantity is to be used for detecting faulty conditions of the machine based on the investigating.

According to a corresponding variation of the second aspect, the data adjusting device is further operative to investigate the measured first physical quantity with regard to the adjusted first physical quantity and determine that the adjusted first physical quantity is to be used for detecting faulty conditions of the machine based on the investigating.

The investigating may in this case comprise comparing a difference between the measured first physical quantity and the adjusted first physical quantity with an input threshold and the determining that the adjusted first physical quantity is to be used is made if the input threshold is exceeded. The investigating may additionally comprise comparing an absolute value of the difference with the input threshold.

According to a variation of the first aspect, the method further comprises obtaining a measurement of the second physical quantity of the machine.

According to a corresponding variation of the second aspect, the data adjusting device is further operative to obtain a measurement of the second physical quantity of the machine.

When a measurement of the second physical quantity is obtained, the method may further comprise investigating the measured second physical quantity with regard to the estimation of the second physical quantity based on the measured first physical quantity and determining that the adjusted first physical quantity is to be used for detecting faulty conditions of the machine based on the investigating.

When a measurement of the second physical quantity is obtained, the data adjusting device may be further operative to investigate the measured second physical quantity with regard to the estimation of the second physical quantity based on the measured first physical quantity and determine that the adjusted first physical quantity is to be used for detecting faulty conditions of the machine based on the investigating.

In the above-mentioned cases the investigating may comprise comparing a difference between the measured and the estimated second physical quantity with a corresponding first output threshold and the determining that the adjusted first physical quantity is to be used may be made if the first output threshold is exceeded. The investigating may additionally comprise comparing an absolute value of the difference with the first output threshold.

When a measurement of the second physical quantity is obtained, the method may further comprise investigating the measured second physical quantity with regard to the estimated second physical quantity being output by the second instance of the first machine learning model and generating an alarm based on the investigating.

When a measurement of the second physical quantity is obtained, the data adjusting device may be further operative to investigate the measured second physical quantity with regard to the estimated second physical quantity being output by the second instance of the first machine learning model and generate an alarm based on the investigating.

The investigating may comprise comparing a difference between the measured and the estimated second physical quantity with a corresponding second output threshold and the alarm may be generated if the second output threshold is exceeded. The investigating may additionally comprise comparing an absolute value of the difference with the second output threshold.

The first physical quantity may be a physical quantity of the environment around the machine, such as the ambient temperature of the machine. The second physical quantity may be a physical quantity of the same type as the first physical quantity. In case the first physical quantity is a temperature, the second physical quantity may also be a temperature. Alternatively, the second physical quantity may be of another type that is derivable from the type of the first physical quantity. It may as an example be pressure.

The first physical quantity may alternatively be of another type than temperature, such as pressure.

The first machine learning model may be a thermal machine learning model of the machine, where the output data comprises internal temperatures of the machines. Also the second machine learning model may be a thermal machine learning mode of the machine.

Further objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings.
Fig. 1 is a diagram showing a machine in the form of a motor connected to a motor drive, which motor drives a load.
Fig. 2 schematically shows one realization of a data adjusting device for adjusting data used for detecting faulty conditions of the machine, which data adjusting device is realized as a processor acting on computer instructions in a memory,
Fig. 3 schematically shows a computer program product with computer instructions for realizing the data adjusting functionality of the data adjusting device,
Fig. 4 shows a flow chart of a first embodiment of a method for adjusting data used for detecting faulty conditions of a machine,
Fig. 5 schematically shows one realization of the functionality of the data adjusting device,
Fig. 6 shows a flow chart of a second embodiment of a method for adjusting data used for detecting faulty conditions of a machine corresponding to the realization in fig. 5,
Fig. 7 schematically shows another realization of the functionality of the data adjusting device,
Fig. 8 shows a flow chart of a second embodiment of a method for adjusting data used for detecting faulty conditions of a machine corresponding to the realization in fig. 7,
Fig. 9 shows a flow chart of a number of further method steps used in the second and third embodiments, and
Fig. 10 and 11 show two alternative realizations of the data adjusting functionality.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

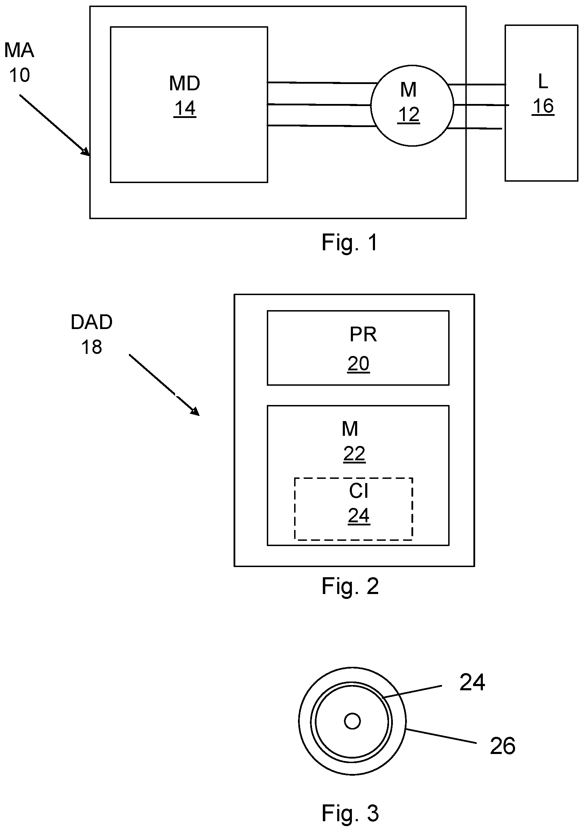

Fig. 1 schematically shows one example of machine MA 10 for which conditioning monitoring may be performed. In the present example the machine 10 comprises an electric motor M 12 that is connected to a motor drive MD 14. The motor 12 also drives a load L 16. It should here be realized that the motor drive can be omitted from the machine.

Condition monitoring may be made on the machine 10, in which condition monitoring one or more physical quantities are investigated in order to determine the health of at least a part of the machine.

In such investigations it is additionally of interest to use machine learning. It is for instance possible to provide input data comprising at least one measured physical quantity associated with the machine into a machine-learning model in order to obtain output data comprising one or more estimated physical quantities of the machine that are to be monitored. The estimated physical quantities can then be used to give an indication about the health of at least a part of the machine.

However, it is possible that one or more of such measured physical quantities are unreliable, perhaps because of a fault in or around the machine. If they are, it is also possible that one or more of the estimated output quantities are incorrect. This may give rise to errors in the condition monitoring.

Aspects of the present disclosure address this issue.

A device that according to aspects of the present disclosure addresses the issue is a data adjusting device. One realization of a data adjusting device DAD 18 is shown in fig. 2. The data adjusting device 18 may be realized as a processor 20 with associated program memory 22 including a computer program with computer program code or computer instructions CI 24 for implementing a data adjusting function.

A computer program may also be provided via a computer program product, for instance in the form of a non-transitory computer readable storage medium or data carrier, like a CD ROM, a memory stick or memory card, carrying such a computer program with the computer program code, which will implement the data adjusting function when being loaded into a processor. One such computer program product in the form of a CD ROM 26 with the above-mentioned computer program comprising computer program code or computer instructions CI 24 is schematically shown in fig. 3.

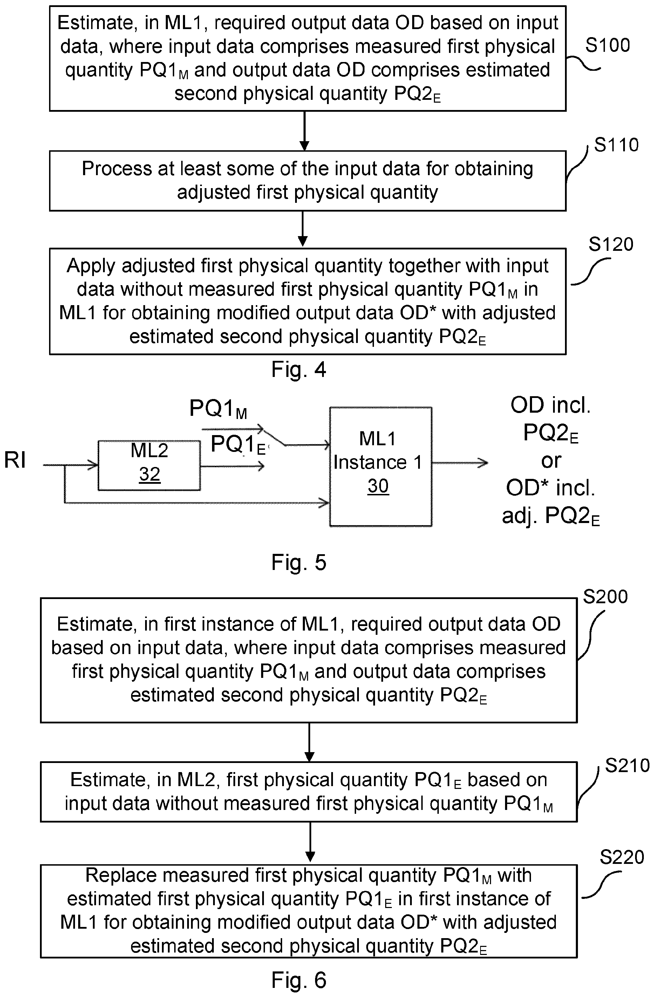

The operation of the data adjusting device according to a first embodiment will now be described with reference being made to fig. 4, which shows a number of method steps in a method for adjusting data used for detecting faulty conditions of the machine 10.

As was mentioned earlier, condition monitoring may be carried out using machine learning. For this reason, the data adjusting function of the data adjusting device 18 comprises a first machine learning model which receives measured input data and estimates output data based on the measured input data, where the input data comprises a measured first physical quantity PQ1_{M} associated with the machine 10 and the output data OD comprises at least one estimated second physical quantity PQ2_{E} of the machine 10.

The first machine learning model may be a thermal machine learning model of the machine, where the output data comprises internal temperatures of the machines.

As an example, the first physical quantity may be the ambient temperature of the machine or a frame temperature of a motor, and the second physical quantity may be another temperature, like a frame temperature or a power module temperature.

In addition to the first physical quantity, the input data may comprise drive and/or motor input data such as speed and current of a motor and switching frequency, output current and output power of a drive stage. The input data may additionally be post-processed such as through forming of moving averages, determining of RMS (root mean square) values and filtering, like Butterworth filtering.

Thus, the first physical quantity may be a physical quantity of the environment around the machine, such as the ambient temperature of the machine. The second physical quantity may be a physical quantity of the same type as the first physical quantity. In case the first physical quantity is a temperature, the second physical quantity may also be a temperature. Alternatively, the second physical quantity may be of another type that is derivable from the type of the first physical quantity. It may as an example be pressure.

The first physical quantity may alternatively be of another type than temperature, such as pressure.

The operation of the data adjusting device according to this first embodiment comprises estimating S100, in the first machine learning model ML1, required output data OD based on the input data, where the input data comprises at least one measured first physical quantity PQ1_{M} associated with the machine 10, such as associated with the environment around the machine, and the output data OD comprises at least one estimated second physical quantity PQ2_{E} of the machine 10, such as a temperature inside the machine. The input data may be measured in or at the machine 10 and then transferred to the data adjusting device 18.

The data adjusting function additionally comprises processing S110 at least some of the input data for obtaining an adjusted first physical quantity, in which adjusted first physical quantity external influences have been limited. The processing may involve estimating the first physical quantity based on the input data without the measured first physical quantity in a second machine-learning model. Thus the rest of the input data may be used to estimate the first physical quantity in the second machine-learning model. Thereby it is possible to obtain a more correct first physical quantity than the one that is being measured, if the accuracy of the measured first physical quantity is degraded. As an alternative to using a second machine learning model, the data adjusting device may comprise a filter and/or delay stage for filtering and/or delaying the measured first physical quantity PQ1_{M}. Thereby it is possible to filter away at least some of the inaccuracies of the measured first physical quantity and/or to delay the impact of the inaccuracies of the measured first physical quantity PQ1_{M}. External influences on the first physical quantity may thus be limited through estimating the first physical quantity based on the rest of the input data or through filtering and/or delay of the measured first physical quantity.

Finally, the data adjusting function comprises applying S120 the adjusted first physical quantity together with the input data without the measured first physical quantity PQ1_{M} in the first machine learning model ML1 for obtaining modified or adjusted output data OD* for use in detecting faulty conditions of the machine, which modified output data OD* comprises an adjusted estimated physical quantity PQ2_{E} in which the external influences have been limited.

The estimating of the required output data OD based on the input data may be made in a first instance of the first machine learning model. The applying of the adjusted first physical quantity in the first machine learning model may then be made in the first instance of the first machine learning model. Alternatively, it may be applied in a second instance of the first machine learning model.

It can in this way be seen that it is possible to obtain a better estimate of the second physical quantity even if the measured first physical quantity is inaccurate. Thereby the condition monitoring may be improved. This may help in different situations such as when to decide that maintenance is to be made.

When a second machine learning model is used, it may also be a thermal machine learning model of the machine, where the output comprises the ambient temperature of the machine.

The machine learning models may be trained machine learning models. The post-processed input data may be used in all machine-learning models. The first machine learning model may additionally be a machine learning model for predicting a frame or power module temperature of a drive and/or target temperatures of a motor, such as rotor fin, winding, DE bearing and NDE bearing temperatures.

Although temperatures were given as an example, it should be realized that other physical quantities may be used, such as pressures. The first physical quantity may for instance be a supply or inlet pressure to the machine and the second physical quantity a related internal or coolant pressure of the machine.

Now a second embodiment will be described with reference being made to fig. 5 and 6, where fig. 5 schematically shows one realization of the functionality of the data adjusting device and fig. 6 shows a flow chart of a number of steps in the second embodiment of the method for adjusting data used for detecting faulty conditions of a machine.

As can be seen in fig. 5, the data adjusting device 18 implements a first instance of the first machine learning model ML1 30 as well as a second machine learning model ML2 32, where the second machine learning model 32 receives the input data without the measured first physical quantity PQ1_{M}, i.e. the rest of the input data RI, as input, and provides an estimated first physical quantity PQ1_{E} as output. The first instance of the first machine learning model 30 also receives the input data without the measured first physical quantity, i.e. the rest of the input data RI. It also receives either the measured first physical quantity PQ1_{M} or the estimated first physical quantity PQ1_{E} as input, where the selection of which version of the first physical quantity to receive may be made using a switch. The first instance of the first machine learning model 30 provides non-modified output data OD including an (unadjusted) estimated second physical quantity PQ2_{E} or modified output data OD* with an adjusted estimated second physical quantity PQ2_{E}, where the provision of the non-modified output data OD or the modified output data OD* depends on which version of the first physical quantity that is used in the first instance of the first machine learning model 30. The adjusting of the estimated second physical quantity PQ2_{E} is thus caused by the use of the estimated first physical quantity PQ1_{E} in the first instance of the first machine learning model 30.

In this embodiment the operation may comprise estimating S200, in the first instance of the first machine learning model 30, required output data OD based on input data, where the input data comprises the measured first physical quantity PQ1_{M} and the output data comprises the estimated second physical quantity PQ2_{E}. The operation further comprises estimating S210, in the second machine learning model 32, the first physical quantity PQ1_{E} based on the input data without the measured first physical quantity PQ1_{M}, i.e. based on the rest of the input data RI, and replacing S220 the measured first physical quantity PQ1_{M} with the estimated first physical quantity PQ1_{E} in the first instance of the first machine learning model 30. Thereby the output data is modified output data OD* with an adjusted estimated second physical quantity PQ2_{E}, which modification is made based on the change to using the estimated first physical quantity PQ1_{E}. Thereby there is also a switch from using the non-modified output data OD comprising the (unadjusted) estimated second physical quantity to using the modified output data OD* with the adjusted estimated second physical quantity in the condition monitoring.

This has the advantage of providing a good (adjusted) estimate of the second physical quantity with limited influences from errors in the measured first physical quantity using a limited amount of processing.

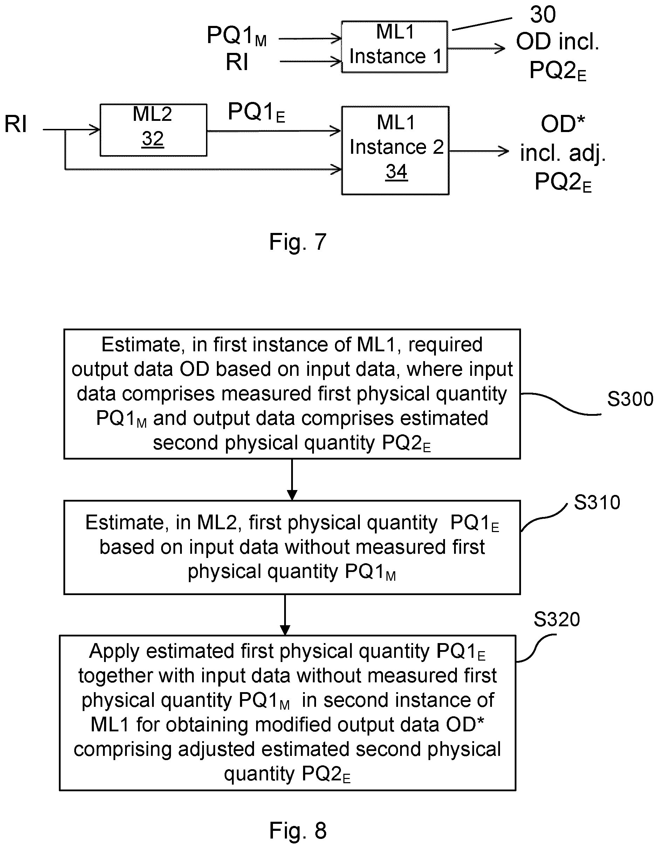

A third embodiment will now be described with reference being made to fig. 7 and 8, where fig. 7 schematically shows another realization of the functionality of the data adjusting device 18 and fig. 8 shows a flow chart of a number of methods steps in the third embodiment of the method for adjusting data used for detecting faulty conditions of a machine.

As can be seen in fig. 7, there is a first instance of the first machine learning model ML1 30 that receives the original input data. It thus receives the measured first physical quantity PQ1_{M} as well as the rest of the input data RI and provides the non-modified output data OD with the (unadjusted) estimated second physical quantity PQ2_{E} as output. There is also a second machine learning model ML2 32, where the second machine learning model 32 receives the input data without the measured first physical quantity, i.e. the rest of the input data RI, as input and provides an estimated first physical quantity PQ1_{E} as output. The estimated first physical quantity PQ1_{E} is provided as input to a second instance of the first machine learning model ML1 34 as is also the rest of the input data RI. The second instance of the first machine learning model 34 provides modified output data OD* including an adjusted estimated second physical quantity PQ2_{E}.

In this embodiment the operation comprises estimating S300, in the first instance of the first machine learning model 30, required output data OD based on input data, where the input data comprises the measured first physical quantity PQ1_{M} and the non-modified output data OD comprises the (unadjusted) estimated second physical quantity PQ2_{E}. The operation also comprises estimating S310, in the second machine learning model 32, the first physical quantity PQ1_{E} based on the input data without the measured first physical quantity RI, and applying S320 the estimated first physical quantity PQ1_{E} together with the input data without the measured first physical quantity PQ1_{M} in the second instance of the first machine learning model 34 for obtaining modified output data OD* comprising an adjusted estimated second physical quantity PQ2_{E},.

In this embodiment there are two processing paths operating in parallel for producing the non-modified output data OD and the modified output data OD* via the two instances of the first machine learning model. The use of the modified output data OD* in condition monitoring is done through selecting the output of the second instance of the first machine learning model 34 instead of the output of the first instance of the first machine learning model 30. It is thus a selection of output signal for use in condition monitoring as opposed to an input signal selection.

This has the advantage of allowing a better adjusted estimate of the second physical quantity to be obtained fast. The improvement can be achieved since the second instance of the first machine learning model can be trained using the estimate of the first physical quantity.

As can be seen above, there is in all embodiments a change from using the measured first physical quantity to using the adjusted or estimated first physical quantity for condition monitoring.

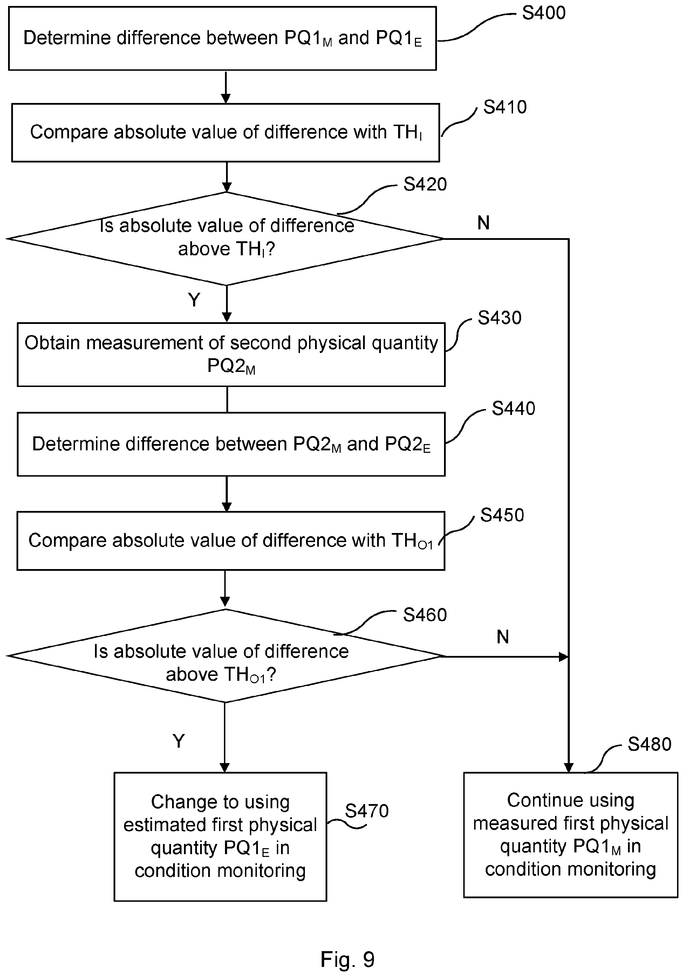

How this change can be carried out for the second and third embodiments will now be described with reference being made to fig. 9, which shows a flow chart of a number of further method steps.

In order to determine when to change from using the measured first physical quantity PQ1_{M} to using the estimated first physical quantity PQ1_{E}, the measured first physical quantity PQ1_{M} is investigated with regard to the estimated first physical quantity PQ1_{E}. The investigating may comprise determining S400 a difference between the measured first physical quantity PQ1_{M} and the estimated first physical quantity PQ1_{E}, which difference may be termed a first difference. The first difference and more particularly an absolute value of the first difference may then be compared S410 with an input threshold TH_{I}. In case the absolute value of the first difference is below the input threshold TH_{I}, S420, the measured first physical quantity PQ1_{M} is continued to be used in condition monitoring, S480, i.e. it is used in detecting faulty conditions of the machine.

However, if the input threshold TH_{I} is exceeded, i.e. the absolute value of the first difference is above the input threshold THr, then a measured second physical quantity PQ2_{M} of the machine 10 is obtained, S430. The measurement may be made in the machine and transferred to the data adjusting device 18. The measured second physical quantity PQ2_{M} is then investigated with regard to the estimated second physical quantity PQ2_{E} being provided by the first instance of the first machine learning model 30 when the measured first physical quantity PQ1_{M} is used. In this case, the investigating comprises determining S440 a difference between the measured second physical quantity PQ2_{M} and the estimated second physical quantity PQ2_{E}, which difference may be termed a second difference, and comparing S450 the second difference with a corresponding first output threshold TH_{O1}. The comparing may be a comparing of an absolute value of the second difference with the first output threshold TH_{O1}. In case the absolute value of the second difference is below the first output threshold TH_{O1}, S460, the measured first physical quantity PQ1_{M} is continued to be used in condition monitoring, S480. However, in case the first output threshold TH_{O1} is exceeded, S460, i.e. if the second difference is above the first output threshold THO1, then it is determined that the estimated first physical quantity PQ1_{E} is to be used in condition monitoring, i.e. in detecting faulty conditions of the machine.

Thereby it can be seen that the determining that the estimated first physical quantity is to be used for condition monitoring, i.e. for detecting faulty conditions of the machine, is made based on the investigating of the first physical quantity and on the investigating of the second physical quantity.

It should here be realised that it is possible to only investigate the first physical quantity or the second physical quantity.

Optionally, there may also be an investigating of the measured second physical quantity with regard to an adjusted estimated second physical quantity being provided by the second instance of the first machine learning model and generating an alarm based on the investigating.

The latter investigating may comprise determining a difference between the measured second physical quantity PQ2_{M} and the adjusted estimated second physical quantity PQ2_{E}, which difference may be termed a third difference, and comparing the third difference with a corresponding second output threshold. The comparing may be a comparing of an absolute value of the third difference with the second output threshold. In case the absolute value of the second difference is above the second output threshold an alarm may be generated.

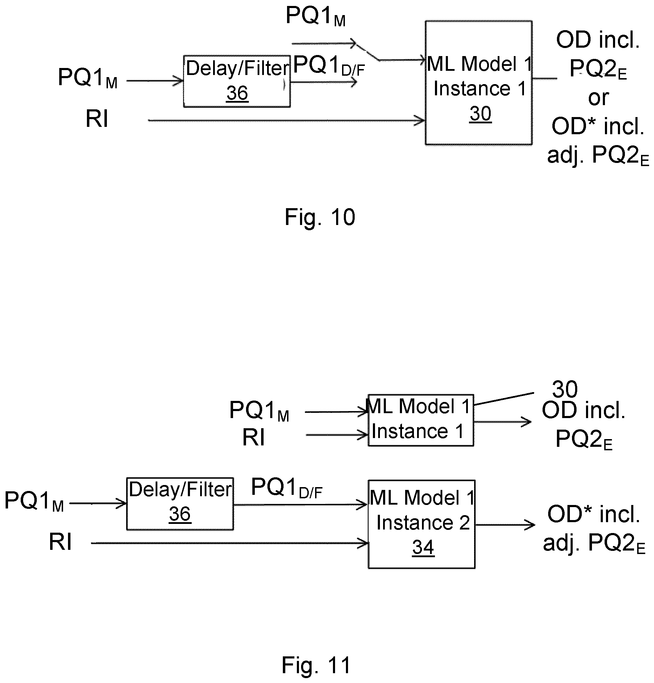

As was mentioned earlier, it is possible to use a filtered or delayed measured first physical quantity instead of the estimated first physical quantity. Fig. 10 and 11 schematically show variations of the second and third embodiments where the second machine learning model has been replaced with a filter/delay stage 36 providing a delayed and/or filtered first physical quantity PQ1_{D/F} as the adjusted first physical quantity. Also, the filter/delay stage 36 only receives the measured first physical quantity PQ1_{M} and not the rest of the input data RI.

According to another variation, the estimation of the first physical quantity may be made based on the rest of the input data RI using an analytical model of the first physical quantity. This analytical model may be provided instead of or as a part of the second machine learning model.

The analytical model may be a model where the first physical quantity is expressed as a function of operating conditions and environmental conditions of the machine, where the operating conditions may comprise information such as motor speed, motor current and output frequency and the environmental conditions may comprise reference temperatures and cooling means.

The different ways of selecting to replace the non-modified output data with the modified output data described above can also be used in the above-described variations.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method of adjusting data used for detecting faulty conditions of a machine (10), the method comprising:
- estimating (S100; S200; S300), in a first machine learning model (30), required output data (OD) based on input data, which input data comprises at least one measured first physical quantity (PQ1_{M}) associated with the machine (10) and said output data (OD) comprises at least one estimated second physical quantity (PQ2_{E}) of the machine (10),
- processing (S110; S210; S310) at least some of the input data for obtaining an adjusted first physical quantity (PQ1_{E}; PQ1_{D/F}), in which adjusted first physical quantity (PQ1_{E}; PQ1_{D/F}) external influences have been limited, and
- applying (S120) the adjusted first physical quantity (PQ1_{E}; PQ1_{D/F}) together with the input data without the measured first physical quantity (RI) in the first machine learning model (30; 34) for obtaining modified output data (OD*) for use in detecting faulty conditions of the machine, which modified output data (OD*) comprises at least one adjusted estimated second physical quantity (PQ2_{E}) in which said external influences have been limited.

2. The method as claimed in claim 1, wherein the processing comprises estimating (S210; S310) the first physical quantity (PQ1_{E}) based on said input data without the measured first physical quantity (RI).

3. The method as claimed in claim 2, wherein the estimating (S210; S310) of the first physical quantity (PQ1_{E}) is performed in a second machine learning model (32).

4. The method according to claim 2 or 3, wherein the estimating (S210; S310) of the first physical quantity (PQ1_{E}) is made using an analytical model of the first physical quantity.

5. The method according to any previous claim, wherein the estimating (S100; S200; S300) is, made in a first instance of the first machine learning model (30) and the applying of the adjusted first physical quantity in the first machine learning model comprises applying (S330) the adjusted first physical quantity (PQ1_{E}; PQ1_{D/F} ) together with the input data without the measured first physical quantity in a second instance of the first machine learning model (34).

6. The method according to claim 5, further comprising obtaining (S430) a measurement of the second physical quantity (PQ2_{M}) of the machine (10), investigating the measured second physical quantity with regard to the estimated second physical quantity being output by the second instance of the first machine learning model and generating an alarm based on the investigating.

7. The method according to any previous claim, further comprising obtaining (S430) a measurement of the second physical quantity (PQ2_{M}) of the machine (10), investigating the measured second physical quantity (PQ2_{M}) with regard to the estimation of the second physical quantity (PQ2_{E}) based on the measured first physical quantity (PQ1_{M}) and determining (S470) that the adjusted first physical quantity (PQ1_{A}; PQ1_{E}) is to be used for detecting faulty conditions of the machine based on the investigating.

8. The method according to claim 7, wherein the investigating comprises comparing (S450) a difference between the measured and the estimated second physical quantity (PQ2_{M}, PQ2_{E}) with a corresponding output threshold (TH_{O1}) and the determining that the adjusted first physical quantity (PQ1_{E}; PQ1_{D/F} ) is to be used is made if the output threshold (TH_{O1}) is exceeded (S460).

9. The method according to any of claims 1 - 4, 7 or 8, wherein the applying of the adjusted first physical quantity (PQ1_{E}; PQ1_{D/F}) in the first machine learning model comprises replacing (S230) the measured first physical quantity with the adjusted first physical quantity in the first machine learning model (30).

10. The method according to any previous claim, further comprising investigating the measured first physical quantity (PQ1_{M}) with regard to the adjusted first physical quantity (PQ1_{E}; PQ1_{D/F}) and determining (S470) that the adjusted first physical quantity (PQ1_{E}; PQ1_{D/F}) is to be used for detecting faulty conditions of the machine based on the investigating.

11. The method according to claim 10, wherein the investigating comprises comparing (S410) a difference between the measured first physical quantity (PQ1_{M}) and the adjusted first physical quantity (PQ1_{E}; PQ1_{D/F}) with an input threshold (TH_{I}) and the determining that the adjusted first physical quantity is to be used for obtaining the required output data is made if the input threshold (TH_{I}) is exceeded (S420).

12. The method according to any previous claim, wherein the first physical quantity is a physical quantity of the environment around the machine, such as the ambient temperature.

13. A data adjusting device (18) for adjusting data used for detecting faulty conditions of a machine (10), the data adjusting device (18) comprising a processor (20) operative to:
- estimate, in a first machine learning model (30), required output data (OD) based on input data, which input data comprises at least one measured first physical quantity (PQ1_{M}) associated with the machine (10) and said output data comprises at least one estimated second physical quantity (PQ2_{E}) of the machine (10),
- process at least some of the input data for obtaining an adjusted first physical quantity (PQ1_{E}; PQ1_{D/F}), in which adjusted first physical quantity (PQ1_{E}; PQ1_{D/F}) external influences have been limited, and
- apply the adjusted first physical quantity (PQ1_{E}; PQ1_{D/F}) together with the input data without the measured first physical quantity (RI) in the first machine learning model (30; 34) for obtaining modified output data (OD*) for use in detecting faulty conditions of the machine, which modified output data (OD*) comprises at least one adjusted estimated second physical quantity (PQ2_{E}) in which said external influences have been limited.

14. A computer program for adjusting data used for detecting faulty conditions of a machine (10), the computer program comprising computer program code (24) which when run by a processor (20) of a data adjusting device (18) causes the data adjusting device (18) to:
- estimate, in a first machine learning model (30), required output data (OD) based on input data, which input data comprises at least one measured first physical quantity (PQ1_{M}) associated with the machine and said output data comprises at least one estimated second physical quantity (PQ2_{E}) of the machine (10),
- process at least some of the input data for obtaining an adjusted first physical quantity (PQ1_{E}; PQ1_{D/F}), in which adjusted first physical quantity (PQ1_{E}; PQ1_{D/F}) external influences have been limited, and
- apply the adjusted first physical quantity (PQ1_{E}; PQ1_{D/F}) together with the input data without the measured first physical quantity (RI) in the first machine learning model (30; 34) for obtaining modified output data (OD*) for use in detecting faulty conditions of the machine, which modified output data (OD*) comprises at least one adjusted estimated second physical quantity (PQ2_{E}) in which said external influences have been limited.

15. A computer program product for adjusting data used for detecting faulty conditions of a machine (10), the computer program product comprising a data carrier (26) with the computer program code (24) according to claim 14.
